# FASCICULE DE BREVET EUROPEEN

(11) **EP 2 483 114 B1**
(45) Date de publication et mention de la délivrance du brevet: **04.09.2013**
(21) Numéro de dépôt: 10742178.6
(22) Date de dépôt: 02.07.2010
(51) Int. Cl.: B60T 7/12, B60R 16/023

(54) **AGENCEMENT D'UN CALCULATEUR DE FREIN DE PARKING AUTOMATIQUE DANS UN VEHICULE AUTOMOBILE ET VEHICULE AUTOMOBILE COMPORTANT UN TEL AGENCEMENT**
AUTOMATISCHE PARKBREMSEN-COMPUTER-ANORDNUNG IN EINEM KRAFTFAHRZEUG UND KRAFTFAHRZEUG MIT EINER DERARTIGEN ANORDNUNG
AUTOMATIC PARKING BRAKE COMPUTER ARRANGEMENT IN A MOTOR VEHICLE, AND MOTOR VEHICLE COMPRISING SUCH AN ARRANGEMENT

(30) Priorité: 29.09.2009 FR 0956740
(43) Date de publication de la demande: 08.08.2012
(73) Titulaire: Renault S.A.S., 92100 Boulogne-Billancourt (FR)
(72) Inventeur: LARVOR, Philippe, F-78960 Voisins-le-Bretonneux (FR); FRABOT, Stephane, F-78114 Magny-les-Hameaux (FR)
(86) Numéro de dépôt international: PCT/FR2010/051393
(87) Numéro de publication internationale: WO 2011/039437

(56) Documents cités:
- WO-A1-02/22414
- US-A1- 2001 032 760

## Description

### Domaine technique de l'invention

L'invention concerne un agencement d'un calculateur de frein de parking automatique dans un véhicule automobile, notamment du type à deux ou trois portes, lequel véhicule comporte au moins un support de fixation garniture, solidaire de la caisse du véhicule.

L'invention concerne également un véhicule automobile, notamment du type à deux ou trois portes, plus particulièrement du type cabriolet, comportant un tel agencement.

### Etat de la technique

Actuellement, le calculateur du « Frein de Parking Automatique », ou FPA, d'un véhicule automobile, plus particulièrement du type cabriolet, est implanté dans une zone du coffre, ce qui implique un faisceau de câblage important à faire transiter de l'avant du véhicule jusqu'à cette zone du coffre. C'est le cas par exemple pour le véhicule automobile décrit dans le document US 2001/0032760. Toutefois, il résulte notamment d'une telle implantation une génération de contraintes sur le parcours des câbles, car le faisceau de câbles est rigide, lourd et coûteux.

Par ailleurs, il en résulte également des difficultés de montage, car les fixations du câblage, ainsi que le faisceau de câbles en lui-même, se retrouvent dans un environnement très contraint, plus particulièrement à proximité des nombreuses biellettes du mécanisme du toit, dans le cas d'un véhicule du type cabriolet, pour lequel le toit se replie dans la zone du coffre en position cabriolet.

### Objet de l'invention

L'invention a pour but de remédier à l'ensemble des inconvénients précités et a pour objet la réalisation d'un agencement d'un calculateur de frein de parking automatique qui permette de réduire le volume des câbles en transit vers le coffre du véhicule, tout en évitant les risques de contact entre les biellettes du mécanisme de toit et le faisceau de câbles.

L'objet de l'invention est caractérisé, plus particulièrement, par le fait que l'agencement comporte des moyens de fixation associés audit support de fixation garniture, de sorte à ce que le calculateur est positionné sensiblement au niveau des sièges arrière du véhicule.

Un tel agencement permet ainsi de positionner le calculateur dans une zone plus proche de l'avant du véhicule et éloigné du mécanisme de toit du véhicule automobile associé.

D'autres avantages et caractéristiques de l'invention peuvent être considérées isolément ou en combinaison :
- Lesdits moyens de fixation peuvent comporter un support de calculateur, destiné à se fixer sur ledit support de fixation garniture et sur lequel est fixé le calculateur.
- Ledit support de calculateur peut être muni de deux goujons, coopérant avec deux organes de fixation du calculateur.
- Lesdits moyens de fixation peuvent comporter au moins deux premiers trous de fixation, réalisés dans ledit support de fixation garniture et destinés à coopérer avec au moins deux seconds trous de fixation, réalisés dans ledit support de calculateur.

- Lesdits seconds trous de fixation réalisés dans le support de calculateur peuvent être sensiblement de forme oblongue.
- Ledit support de calculateur peut être fixé sur ledit support de fixation garniture par des vis autotaraudeuses, traversant lesdits premiers et seconds trous de fixation.
- Ledit support de fixation garniture peut comporter un orifice apte à coopérer avec une languette de pré-maintien réalisée dans ledit support de calculateur.
- Ledit support de fixation garniture étant conformé de sorte à définir une patte de fixation en L, faisant saillie en direction des sièges arrière, ledit support de calculateur peut être muni d'une patte en saillie comportant une découpe de pré-maintien du support de calculateur sur ledit support de fixation garniture, apte à coopérer avec ladite patte de fixation en L du support de fixation garniture.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 représente une vue en perspective illustrant un mode particulier de réalisation d'un agencement d'un calculateur de frein de parking automatique selon l'invention, implanté dans un véhicule automobile du type cabriolet.
La figure 2 représente une vue en perspective agrandie de l'agencement selon la figure 1.
La figure 3 représente une vue en perspective éclatée de l'agencement selon les figures 1 et 2, illustrant plus en détails les moyens de fixation de l'agencement.

### Description de modes particuliers de réalisation

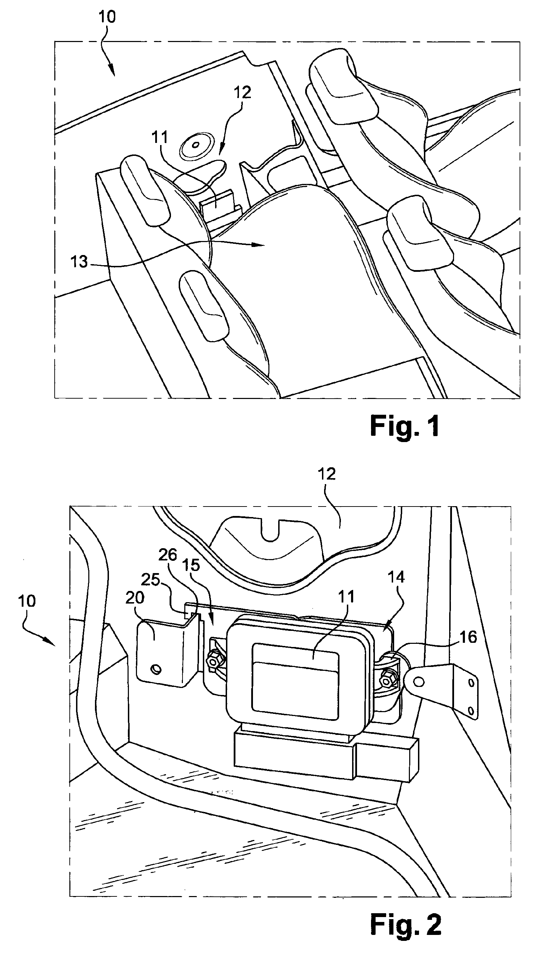

En référence aux figures 1 à 3, l'agencement 10 selon l'invention consiste à implanter un calculateur 11 de frein de parking automatique, ou FPA, au niveau de la zone custode d'un véhicule automobile du type à deux ou trois portes. Plus particulièrement, dans un véhicule automobile du type cabriolet, la caisse 12 du véhicule comporte au niveau de la zone custode, à savoir sous chaque vitre arrière, en regard des sièges arrière 13 du véhicule, un support 14 de fixation garniture, solidaire de la caisse 12 et destiné à la fixation d'une garniture intérieure de véhicule.

Le support 14 de fixation garniture correspond donc à une pièce de tôlerie existante dans le véhicule, laquelle pièce est associée à des moyens de fixation, pour permettre de positionner et fixer le calculateur 11 au niveau du support 14 de fixation garniture, plus particulièrement au niveau des sièges arrière, évitant ainsi un faisceau de câblage s'étendant jusque dans le coffre du véhicule.

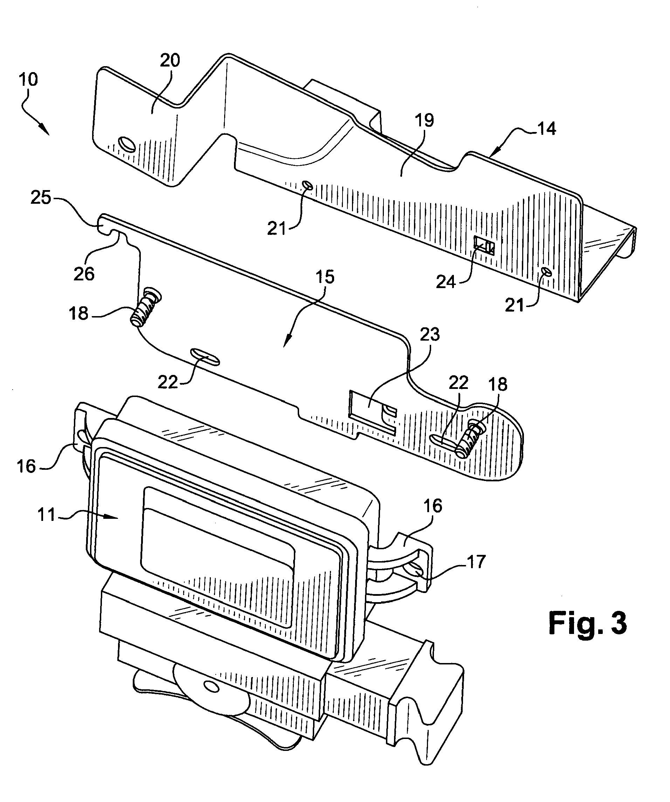

Dans le mode particulier de réalisation représenté plus en détails sur les figures 2 et 3, les moyens de fixation de l'agencement 10 selon l'invention comportent un support de calculateur 15 sur lequel est fixé le calculateur 11. A titre d'exemple, le calculateur 11 est muni de deux pattes 16 comportant chacune un orifice de fixation 17 et le support de calculateur 15 comporte, de préférence, deux goujons 18, par exemple soudés sur le support de calculateur 15, destinés à s'insérer dans les deux orifices de fixation 17, pour la fixation du calculateur 11 sur le support de calculateur 15.

Dans le mode particulier de réalisation représenté sur les figures 1 à 3, le support de calculateur 15 est quant à lui fixé sur le support 14 de fixation garniture, lequel est conformé de sorte à définir une surface de fixation 19, recevant le support de calculateur 15, et une patte de fixation 20 sensiblement en forme de L, faisant saillie en direction des sièges arrière 13. Plus particulièrement, comme représenté sur la figure 2, la patte de fixation 20 permet de décaler la fixation de la garniture par rapport à la surface de fixation 19, de sorte à enfermer le calculateur 11 entre la caisse 12 et la garniture (non représentée sur les figures pour des raisons de clarté) une fois cette dernière montée sur la caisse 12.

Sur la figure 3, le support 14 de fixation garniture comporte, de préférence, deux trous de fixation 21, coopérant avec deux trous de fixation 22 réalisés dans le support de calculateur 15. Les trous de fixation 22 du support de calculateur 15 sont, par exemple, de forme oblongue et le support de calculateur 15 est fixé sur le support 14 de fixation garniture, par exemple, par l'intermédiaire de vis autotaraudeuses, traversant les trous de fixation 21 du support 14 de fixation garniture et les trous de fixation 22 du support de calculateur 15.

La forme oblongue des trous de fixation 22 du support de calculateur 15 permet notamment, lors du montage et de la fixation de l'agencement 10 selon l'invention, de positionner les trous de fixation 21 en regard des trous de fixation 22, avec une possibilité de jeu latéral de positionnement, optimisant ainsi la fixation.

Par ailleurs, comme représenté plus particulièrement sur la figure 3, le support de calculateur 15 comporte une languette 23 de pré maintien réalisée dans l'épaisseur du support de calculateur 15 et faisant saillie du support de calculateur 15, de sorte à coopérer avec un orifice 24 de pré maintien, par exemple de forme rectangulaire ou carrée, réalisé dans l'épaisseur de la surface de fixation 19 du support 14 de fixation garniture.

De même, le support de calculateur 15 est doté avantageusement d'une patte en saillie 25, comportant une découpe 26 de pré maintien (figure 3), destinée à coopérer avec la patte de fixation 20 en L du support 14 de fixation garniture pour le pré maintien du support de calculateur 15 sur le support 14 de fixation garniture (figure 2), avant fixation du support de calculateur 15 sur le support 14 de fixation garniture.

Il est ainsi possible de maintenir le calculateur 11 sur la caisse 12 du véhicule automobile avant vissage sur les différents supports 14, 15, grâce aux organes de pré maintien, à savoir la languette 23, l'orifice 24, la patte 25 et la découpe 26.

Un tel agencement 10 selon l'invention, comme décrit ci-dessus en référence aux figures 1 à 3, permet donc, notamment grâce aux différents moyens de fixation associés au support 14 de fixation de garniture, de positionner le calculateur 11 dans une zone en regard des sièges arrière et non dans une zone du coffre. Il en résulte une réduction du volume et de la longueur des câbles en transit vers le coffre du véhicule, évitant ainsi les risques de contact entre les biellettes du mécanisme de toit d'un véhicule automobile du type cabriolet et le faisceau de câbles. Il en résulte également une simplification de montage et une réduction du poids et des coûts associés.

L'invention n'est pas limitée aux différents modes de réalisation décrits ci-dessus. Notamment, la forme et les dimensions des moyens de fixation associés au support 14 de fixation garniture peuvent être différentes, tant qu'elles permettent le positionnement du calculateur 11 en zone custode, au niveau des sièges arrière du véhicule automobile. Les moyens de pré maintien de l'agencement 10, à savoir la languette 23, l'orifice 24, la patte 25 et la découpe 26, peuvent également être différents, tant qu'ils permettent le pré maintien du support de calculateur 15 avant vissage sur le support 14 de fixation garniture.

Par ailleurs, les moyens de fixation de l'agencement 10 peuvent être différents, tant qu'ils permettent la bonne fixation du calculateur 11 sur la caisse 12 du véhicule automobile.

Notamment, dans une variante de réalisation non représentée, le calculateur 11 peut être fixé directement sur le support 14 de fixation garniture par des moyens de fixation appropriés. A titre d'exemple, le support 14 de fixation garniture peut comporter des orifices coopérant avec des vis ou des goujons associés à des organes de fixation du calculateur 11. Il n'est alors plus nécessaire d'utiliser un support de calculateur 15 comme décrit ci-dessus.

L'agencement selon l'invention s'applique donc à tout type de véhicule automobile à deux ou trois portes, de préférence à un véhicule du type cabriolet, dont le mécanisme d'actionnement du toit est volumineux dans la zone du coffre. Un tel agencement selon l'invention permet ainsi d'optimiser le positionnement du calculateur de frein de parking automatique dans le véhicule.

## Revendications

1. Agencement (10) d'un calculateur (11) de frein de parking automatique dans un véhicule automobile, notamment du type à deux ou trois portes, lequel véhicule comporte au moins un support (14) de fixation garniture, solidaire de la caisse (12) du véhicule,
agencement **caractérisé en ce qu'**il comporte des moyens de fixation (15) associés audit support (14) de fixation garniture, de sorte à ce que le calculateur (11) est positionné sensiblement au niveau des sièges arrière (13) du véhicule.

2. Agencement selon la revendication précédente, **caractérisé en ce que** lesdits moyens de fixation comportent un support de calculateur (15), destiné à se fixer sur ledit support (14) de fixation garniture et sur lequel est fixé le calculateur (11).

3. Agencement selon la revendication précédente, **caractérisé en ce que** ledit support de calculateur (15) est muni de deux goujons (18), coopérant avec deux organes de fixation (16, 17) du calculateur (11).

4. Agencement selon l'une des revendications 2 et 3, **caractérisé en ce que** lesdits moyens de fixation comportent au moins deux premiers trous de fixation (21), réalisés dans ledit support (14) de fixation garniture et destinés à coopérer avec au moins deux seconds trous de fixation (22), réalisés dans ledit support de calculateur (15).

5. Agencement selon la revendication précédente, **caractérisé en ce que** lesdits seconds trous de fixation (22) réalisés dans le support de calculateur (15) sont sensiblement de forme oblongue.

6. Agencement selon l'une des revendications 4 et 5, **caractérisé en ce que** ledit support de calculateur (15) est fixé sur ledit support (14) de fixation garniture par des vis autotaraudeuses, traversant lesdits premiers (21) et seconds (22) trous de fixation.

7. Agencement selon l'une quelconque des revendications 2 à 6, **caractérisé en ce que** ledit support (14) de fixation garniture comporte un orifice (24) apte à coopérer avec une languette (23) de pré-maintien réalisée dans ledit support de calculateur (15).

8. Agencement (10) selon l'une quelconque des revendications 2 à 7, dans lequel ledit support (14) de fixation garniture est conformé de sorte à définir une patte de fixation (20) en L, faisant saillie en direction des sièges arrière (13), **caractérisé en ce que** ledit support de calculateur (15) est muni d'une patte (25) en saillie comportant une découpe (26) de pré-maintien du support de calculateur (15) sur ledit support (14) de fixation garniture, apte à coopérer avec ladite patte de fixation (20) en L du support (14) de fixation garniture.

9. Véhicule automobile, notamment du type à deux ou trois portes, **caractérisé en ce qu'**il comporte un agencement (10) d'un calculateur (11) de frein de parking automatique selon l'une quelconque des revendications précédentes.

## Patentansprüche

1. Anordnung (10) eines Rechners (11) einer automatischen Parkbremse in einem Kraftfahrzeug, insbesondere von der Art mit zwei oder drei Türen, wobei das Fahrzeug mindestens eine Verkleidungshalterung (14) aufweist, die fest mit der Karosserie (12) des Fahrzeugs verbunden ist, wobei die Anordnung **dadurch gekennzeichnet ist, dass** sie der Verkleidungshalterung (14) zugeordnete Befestigungseinrichtungen (15) aufweist, so dass der Rechner (11) im Wesentlichen im Bereich der Rücksitze (13) des Fahrzeugs positioniert ist.

2. Anordnung nach dem vorhergehenden Anspruch, **dadurch gekennzeichnet, dass** die Befestigungseinrichtungen einen Rechnerhalter (15) aufweisen, der dazu bestimmt ist, an der Verkleidungshalterung (14) befestigt zu werden, und an dem der Rechner (11) befestigt ist.

3. Anordnung nach dem vorhergehenden Anspruch, **dadurch gekennzeichnet, dass** der Rechnerhalter (15) mit zwei Stiftbolzen (18) versehen ist, die mit zwei Befestigungselementen (16, 17) des Rechners (11) zusammenwirken.

4. Anordnung nach einem der Ansprüche 2 und 3, **dadurch gekennzeichnet, dass** die Befestigungseinrichtungen mindestens zwei erste Befestigungslöcher (21) aufweisen, die in der Verkleidungshalterung (14) ausgebildet und dazu bestimmt sind, mit mindestens zwei zweiten Befestigungslöchern (22) zusammenzuwirken, die im Rechnerhalter (15) ausgebildet sind.

5. Anordnung nach dem vorhergehenden Anspruch, **dadurch gekennzeichnet, dass** die im Rechnerhalter (15) ausgebildeten zweiten Befestigungslöcher (22) im Wesentlichen eine längliche Form haben.

6. Anordnung nach einem der Ansprüche 4 und 5, **dadurch gekennzeichnet, dass** der Rechnerhalter (15) an der Verkleidungshalterung (14) durch Gewindeschneidschrauben befestigt ist, die die ersten (21) und zweiten (22) Befestigungslöcher durchqueren.

7. Anordnung nach einem der Ansprüche 2 bis 6, **dadurch gekennzeichnet, dass** die Verkleidungshalterung (14) eine Öffnung (24) aufweist, die mit einer im Rechnerhalter (15) ausgebildeten Vorabhaltezunge (23) zusammenwirken kann.

8. Anordnung (10) nach einem der Ansprüche 2 bis 7, wobei die Verkleidungshalterung (14) so gestaltet ist, dass sie eine L-förmige Befestigungslasche (20) definiert, die in Richtung der Rücksitze (13) vorsteht, **dadurch gekennzeichnet, dass** der Rechnerhalter (15) mit einer vorstehenden Lasche (25) versehen ist, die einen Ausschnitt (26) zum Vorabhalten des Rechnerhalters (15) auf der Verkleidungshalterung (14) aufweist, der mit der L-förmigen Befestigungslasche (20) der Verkleidungshalterung (14) zusammenwirken kann.

9. Kraftfahrzeug, insbesondere von der Art mit zwei oder drei Türen, **dadurch gekennzeichnet, dass** es eine Anordnung (10) eines Rechners (11) einer automatischen Parkbremse nach einem der vorhergehenden Ansprüche aufweist.

## Claims

1. Arrangement (10) of an automatic parking brake computer (11) in a motor vehicle, notably of the type with two or three doors, said vehicle comprising at least one trim fixing support (14), securely attached to the body (12) of the vehicle,
the arrangement being **characterized in that** it comprises fixing means (15) associated with said trim fixing support (14), such that the computer (11) is positioned substantially at the level of the rear seats (13) of the vehicle.

2. Arrangement according to the preceding claim **characterized in that** the said fixing means comprise a computer support (15), intended to be fixed onto said trim fixing support (14) and on which the computer (11) is fixed.

3. Arrangement according to the preceding claim, **characterized in that** said computer support (15) is provided with two studs (18), cooperating with two fixing members (16, 17) of the computer (11).

4. Arrangement according to one of Claims 2 and 3, **characterized in that** said fixing means comprise at least two first fixing holes (21), produced in said trim fixing support (14) and intended to cooperate with at least two second fixing holes (22), produced in said computer support (15).

5. Arrangement according to the preceding claim, **characterized in that** said second fixing holes (22) produced in the computer support (15) are substantially of oblong form.

6. Arrangement according to one of Claims 4 and 5, **characterized in that** said computer support (15) is fixed onto said trim fixing support (14) by self-tapping screws, passing through said first (21) and second (22) fixing holes.

7. Arrangement according to any one of Claims 2 to 6, **characterized in that** said trim fixing support (14) comprises an orifice (24) which can cooperate with a pre-retaining tongue (23) produced in said computer support (15).

8. Arrangement (10) according to any one of Claims 2 to 7, in which said trim fixing support (14) is shaped so as to define an L-shaped fixing tab (20), protruding towards the rear seats (13), **characterized in that** said computer support (15) is provided with a protruding tab (25) comprising a cutout (26) for pre-securing the computer support (15) on said trim fixing support (14), which can cooperate with said L-shaped fixing tab (20) of the trim fixing support (14).

9. Motor vehicle, notably of the type with two or three doors, **characterized in that** it comprises an arrangement (10) of an automatic parking brake computer (11) according to any one of the preceding claims.
